# EUROPEAN PATENT APPLICATION

(11) **EP 4 781 881 A1**
(43) Date of publication of application: **29.07.2026**
(21) Application number: 25165942.1
(22) Date of filing: 25.03.2025
(51) Int. Cl.: A47L 9/08, A47L 11/20, A47L 11/30, A47L 11/40

(54) **CLEANING DEVICE**

(30) Priority: 26.01.2025 CN 202510122288
(71) Applicant: Zhou, Xinghua, Jinhua, Zhejiang 321300 (CN)
(72) Inventor: Zhou, Xinghua, Jinhua, Zhejiang 321300 (CN)
(74) Representative: Meyer-Dulheuer MD Legal Patentanwälte PartG mbB

(57) **Abstract**

A cleaning device is provided, which includes a spray cleaning system, a sewage suction system, an air-drying system, and a conversion valve. The spray cleaning system includes a first pathway, a clean water tank, a first pump, and a cleaning component; the sewage suction system includes a second pathway, the cleaning component, a second pump, and a sewage tank. The second pump is configured to drive sewage to be sucked in by the cleaning component and collected in the sewage tank; the air-drying system includes a third pathway, the cleaning component, and the second pump, the second pump is configured to drive airflow into the cleaning component through the third pathway; and includes an inlet end and an outlet end. The present disclosure enables the device to switch between sewage suction and air-drying functions simply and conveniently by designing the conversion valve.

## Description

### CROSS-REFERENCE TO RELATED APPLICATIONS

This application claims priority to Chinese Patent Application No. 202510122288.8, filed on January 26, 2025, which is hereby incorporated by reference in its entirety.

### TECHNICAL FIELD

The present disclosure relates to the field of cleaning equipment technologies, and in particular, to a cleaning device.

### BACKGROUND

With the continuous improvement of people's requirements for cleanliness and hygiene, the functions of cleaning equipment are becoming increasingly diversified. Traditional cleaning equipment usually has a relatively single function and often only has a single cleaning function, such as simple spray cleaning or suction cleaning, which cannot meet diverse needs of users for cleaning and drying in different scenarios. Moreover, some existing multifunctional cleaning equipment has complex function switching structures, inconvenient operation, and are not conducive to user use. At the same time, when switching between different functions, it is difficult for users to intuitively judge whether the switching is in place, which affects a normal use of the equipment.

### SUMMARY

The purpose of the present disclosure is to provide a cleaning device that meets the needs of users, in response to the shortcomings of the existing technology mentioned above.

To achieve the above objectives, the present disclosure provides a cleaning device, including
a spray cleaning system, which includes a first pathway, and a clean water tank, a first pump, and a cleaning component that are connected in series to the first pathway;
a sewage suction system, which includes a second pathway, and the cleaning component, a second pump, and a sewage tank that are connected in series to the second pathway, where the second pump is configured to drive sewage to be sucked in by the cleaning component and collected in the sewage tank;
an air-drying system, which includes a third pathway, and the cleaning component, and the second pump that are connected in series to the third pathway; the second pump is configured to drive airflow into the cleaning component through the third pathway, where the second pump includes an air inlet end and an air outlet end; and
a conversion valve, which is connected in parallel to the air inlet end and the air outlet end, and is configured to selectively connect the second pump to the second pathway or the third pathway to achieve a switching between sewage suction and air-drying functions.

In some embodiments of the present application, the conversion valve includes a valve body, and the valve body includes:
a first air inlet passage, which is configured to selectively connect the sewage tank or environment to the air inlet end;
a first air exhaust passage, which is configured to communicate with the air outlet end and the environment;
a multifunctional passage, which is configured to selectively connect the sewage tank or the air outlet end to the cleaning component;
when the second pump is connected to the second pathway, the cleaning component, the multifunctional passage, the sewage tank, the first air inlet passage, the second pump, and the first air exhaust passage are sequentially communicated; when the second pump is connected to the third pathway, the environment, the first air inlet passage, the pump, the multifunctional passage, and the cleaning component are sequentially communicated.

In some embodiments of the present application, the first air inlet passage includes a sewage suction inlet, an air-drying inlet, and two first air outlets, where the sewage suction inlet is configured to communicate with the sewage tank, the air-drying inlet is configured to communicate with the environment, and the first air outlets are configured to communicate with the air inlet end.

In some embodiments of the present application, the multifunctional passage includes a second air vent, a second water inlet, and a second air outlet, where the second air vent is configured to communicate with the cleaning component,
when the second water inlet is communicated with the sewage tank, the valve sleeve closes the second air outlet, and the multifunctional passage participates in forming the second pathway; when the second air outlet is communicated with the air outlet end, the valve sleeve closes the second water inlet, and the multifunctional passage participates in forming the third pathway.

In some embodiments of the present application, the conversion valve includes a valve sleeve and the valve body inserted into the valve sleeve, a sleeve design provides space and support for a rotation of the valve body; and the second pump is switched to connect with the second pathway or the third pathway by rotating the valve body.

In some embodiments of the present application,, the valve body includes a tubular main valve body, a first partition, and a second partition, where the first partition is configured to separate the first air inlet passage and the first air exhaust passage, and the second partition is configured to separate the multifunctional passage and the first air exhaust passage; the first and second partitions avoid mutual interference of airflow between different pathways, ensuring the independence and stability of each functional pathway;
where the first partition is arranged perpendicular to the tubular main valve body, and/or a longitudinal section of the second partition is S-shaped, an orthographic projection of the first air exhaust passage coincides with an orthographic projection of the multifunctional passage, and the orthographic projection refers to a projection from top to bottom. The S-shaped design enables the valve body to achieve a more complex passage layout within a limited space, thereby improving space utilization and rendering the valve body structure more compact and reasonable; on the other hand, the S-shaped shape can guide and optimize the airflow. Specifically, during the air-drying function, when the airflow flows from the air outlet end of the second pump to the multifunctional passage and reaches the cleaning component, the S-shaped partition can render the airflow smoother, reduce turbulence and energy loss, improve the efficiency of airflow transportation, and enhance the air-drying effect. During the suction function, it also helps to maintain stable airflow between the sewage tank and other pathways, ensuring the smooth progress of the suction process.

In some embodiments of the present application, the cleaning device further includes a main case body, the clean water tank and the sewage tank that are provided on two sides of the main case body,
where the main case body is configured to accommodate the first pump, the second pump, and the conversion valve, the main box protects various components inside the device and provides overall structural support for the device; the main case body includes a first air vent, and the first air vent is configured to communicate with the first air inlet passage or the first air exhaust passage;
the sewage tank includes a water inlet pipe and an air outlet pipe, where the water inlet pipe is communicated with the sewage tank and the multifunctional passage, and the air outlet pipe is communicated with the sewage tank and the first air inlet passage.

In some embodiments of the present application, the valve sleeve is provided with an air inlet branch configured to communicate with the air inlet end and a valve sleeve body configured to accommodate the valve body,
where the valve sleeve body is provided with a first connection pipe and a second connection pipe, the first connection pipe is configured to communicate with the multifunctional passage and the water inlet pipe, and the second connection pipe is configured to communicate with the air outlet pipe and the sewage suction inlet;
a control part is configured to close one end of the valve sleeve body, and the other end of the valve sleeve body is configured to communicate with the cleaning component;
the valve sleeve body includes a third connection pipe and a fourth connection pipe, the first air exhaust passage includes an air outlet opening, the third connection pipe is configured to communicate with the second pump and the air outlet opening, and the fourth connection pipe is configured to communicate with the air outlet opening and the environment;
the valve sleeve body includes a valve sleeve air inlet configured to communicate with the air-drying inlet and the first air inlet passage.

In some embodiments of the present application, the valve sleeve body includes a stop ring configured to abut against the valve body, ensuring a positional accuracy of the valve body during a rotation and ensuring accurate communication of each passage during switching.

In some embodiments of the present application, the valve body rotates at least 90 ° to achieve switching.

In some embodiments of the present application, the valve body includes a control portion extending from the valve sleeve and the main case body, where the control part includes a protrusion that is capable of gripping, and when the protrusion is vertically or horizontally arranged, it prompts to switch into place.

Specifically, the valve body is rotated 180 ° to achieve functional switching. The protrusion includes a first indicator and a second indicator provided at two ends. When the first indicator is located at an upper end, the second pump is connected to the second pathway through the conversion valve to achieve a sewage suction function. When the second indicator is located at the upper end, the second pump is connected to the third pathway through the conversion valve to achieve the air-drying function. This design is beneficial for a user to operate properly and can easily and clearly understand the state of the conversion valve and the second pump.

In some embodiments of the present application, the main case body further includes:
a snail shaped air gathering disc, which includes an air gathering inlet and an air gathering outlet, where the air gathering inlet is configured to communicate with the air outlet end of the second pump, and the air gathering outlet is configured to communicate with the first air exhaust passage or the multifunctional passage; and/or, a heating component configured to heat air so that the cleaning component outputs hot air flow to achieve drying can output a hot air flow to achieve drying and improve drying efficiency.

In some embodiments of the present application, the air gathering inlet is located in its center, and the air gathering outlet is arranged along its tangent direction. The airflow can evenly spread towards an outer circumference of a volute, and under an action of centrifugal force, the airflow can flow along a curve of the volute, thereby achieving the air gathering effect.

In some embodiments of the present application, the heating component can be placed between the air gathering inlet and the second pump, or the heating component can be placed inside the air gathering disc.

In some embodiments of the present application, the cleaning component is a brush head with a brush head passage, and the brush head passage is configured to communicate with the environment and one end of the valve sleeve body.

In some embodiments of the present application, the cleaning device further includes:
a control system, which is configured to coordinate the work of various systems, including the start, stop, and operation parameter adjustment of the spray cleaning system, sewage suction system, and air-drying system; the control system can be a simple manual operation panel or an intelligent control system based on microprocessors, thereby achieving automated and intelligent cleaning processes;
a power module, which is configured to provide power support to the device to ensure its normal operation; the power module can be an external power adapter or a built-in rechargeable battery, and different power forms are suitable for different usage scenarios;
a walking mechanism, which includes walking wheels, and the walking wheels can be driven manually or by motors; the walking mechanism enables the device to move on different ground environments and can also be controlled by the system to perform cleaning work according to preset pathways or modes.

The beneficial effects of the present disclosure are as follows.

By providing with the spray cleaning system, the sewage suction system, and the air-drying system, the device can simultaneously achieve multiple functions such as water spray cleaning, sewage suction, and air-drying, thereby greatly improving the practicality and convenience of the device and meeting the cleaning needs of users in different scenarios. For example, after cleaning the kitchen oily floor, it can be directly dried to avoid slippery floors.

By providing with the conversion valve structure, the second pump can be switched between the second pathway (suction function) and the third pathway (air drying function). Furthermore, a passage layout and connection way of the valve body enable the second pump to be flexibly connected between different passages, thereby meeting the diverse cleaning needs of the device and greatly enhancing its practicality and functionality.

The valve body switches functions by rotating, which is a simple and direct operation way that is easy for the user to master. At the same time, the rotated valve body structure is relatively stable, which can maintain the reliability of each passage connection during frequent switching, thereby reducing an occurrence of faults caused by loose or poor contact of components, and improving the stability and service life of the device.

### BRIEF DESCRIPTION OF DRAWINGS

FIG. 1 is a schematic structural diagram of a cleaning device provided by the present disclosure (dotted lines showing a cleaning component).
FIG. 2 is another schematic structural diagram of the cleaning device provided by the present disclosure in a sewage suction state.
FIG. 3 is an internal schematic diagram of a sewage tank provided by the present disclosure.
FIG. 4 is a schematic diagram of an assembly of a conversion valve and an air gathering disc provided by the present disclosure (pump shown by dotted lines).
FIG. 5 is a schematic diagram of the assembly of the conversion valve and the air gathering disc provided by the present disclosure from another angle.
FIG. 6 is a schematic structural diagram of a valve body provided by the present disclosure.
FIG. 7 is a schematic structural diagram of the valve body provided by the present disclosure.

Numeral reference: 1-main case body; 11-first air vent; 2-clean water tank; 3-sewage tank; 31-water inlet pipe; 32-air outlet pipe; 4-conversion valve; 41-valve sleeve; 411-valve sleeve body; 4111-stop ring; 4112-first connection pipe; 4113-second connection pipe; 4114-third connection pipe; 4115-fourth connection pipe; 4116-valve sleeve air inlet; 412-air inlet branch; 42-valve body; 421-tubular main valve body; 422-first partition; 423-second partition; 424- first air inlet passage; 4241-sewage suction inlet; 4241'- air-drying inlet; 4242-first air outlet; 425-first air exhaust passage; 4251-air outlet opening; 426-multifunctional passage; 4261-second air vent; 4262-second water inlet; 4263-second air outlet; 427-control part; 4271-protrusion; 5-snail shaped air gathering disc; 51-air gathering outlet; 52- air gathering inlet; 62- second pump; 621- air inlet end; 622- air outlet end; 7-cleaning component; 8- heating component.

### DESCRIPTION OF EMBODIMENTS

In order to clarify the purpose, technical solution, and advantages of the present disclosure, a detailed description of the present disclosure will be provided below in combination with the accompanying drawings and specific embodiments.

Here, it should be noted that in order to avoid blurring the present disclosure due to unnecessary details, only the structures and/or processing steps closely related to the solution of the present disclosure are shown in the accompanying drawings, and other details that are not closely related to the present disclosure are omitted.

Additionally, it should be noted that terms "including", "comprising", or any other variation thereof are intended to encompass a non-exclusive inclusion, such that a process, method, item, or device that includes a series of elements not only includes those elements, but also includes other elements that are not explicitly listed or are inherent to such a process, method, item, or device.

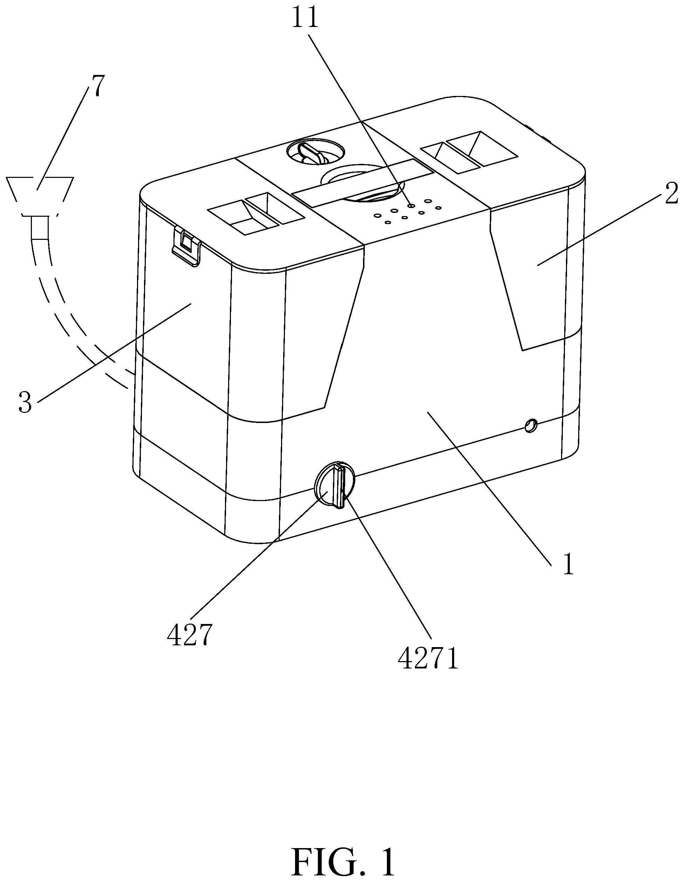

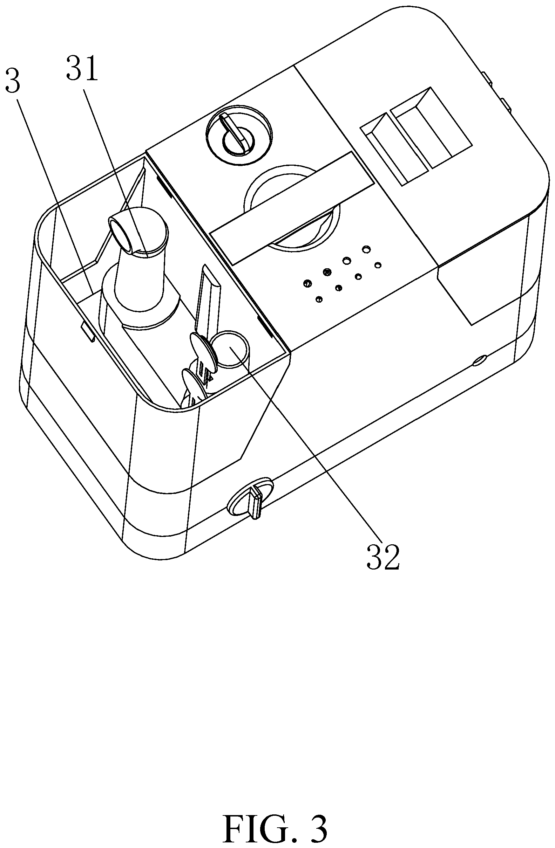

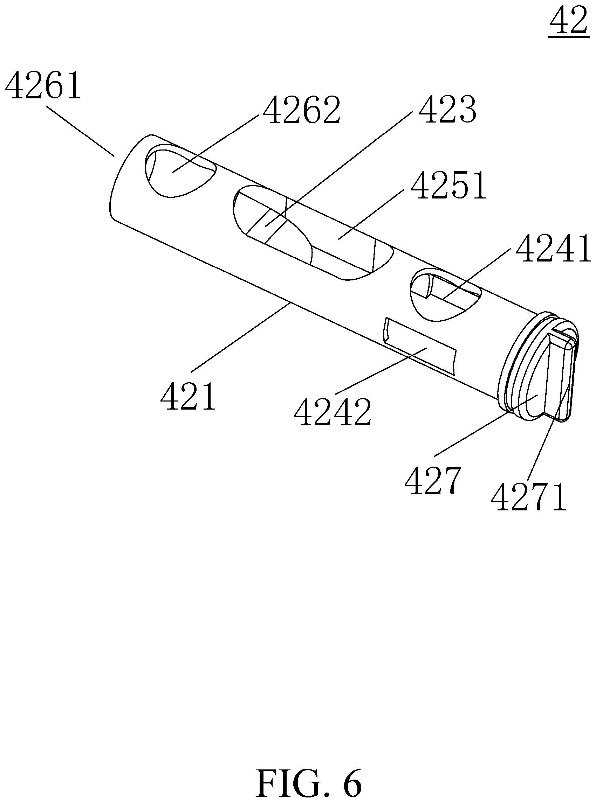

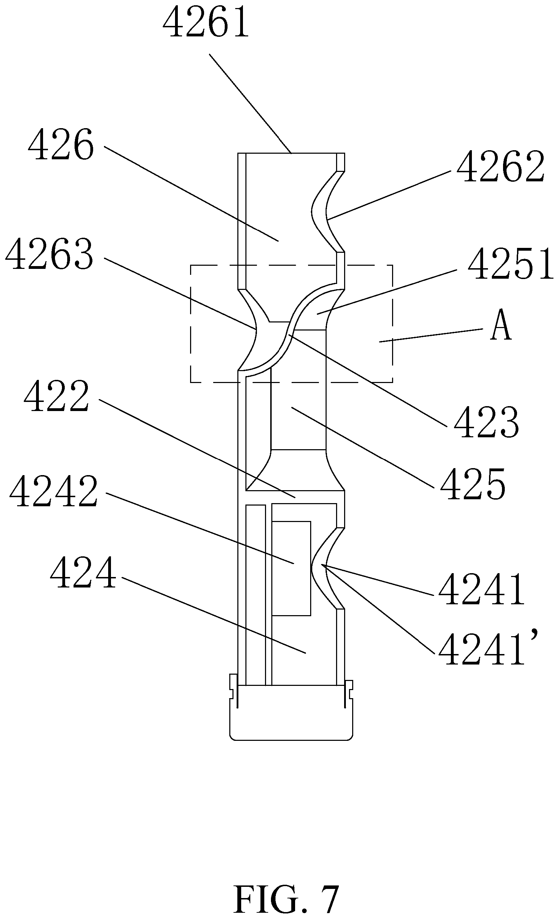

As shown in FIGs. 1-7, the present disclosure provides a cleaning device, which includes a spray cleaning system, a sewage suction system, an air-drying system, and a conversion valve 4. The spray cleaning system includes a first pathway, and a clean water tank 2, a first pump, and a cleaning component 7 that are connected in series to the first pathway. The cleaning component 7 is a brush head with a brush head passage. The sewage suction system includes a second pathway, and the cleaning component 7, a second pump, and a sewage tank 3 that are connected in series to the second pathway. The second pump is configured to drive sewage to be sucked in by the cleaning component 7 and collected in the sewage tank 3. The air-drying system includes a third pathway, the cleaning component 7, and the second pump that are connected in series to the third pathway, the second pump is configured to drive airflow into the cleaning component 7 through the third pathway. The second pump 62 includes an air inlet end 621 and an air outlet end 622, and the conversion valve 4 is connected in parallel to the air inlet end 621 and the air outlet end 622. The conversion valve 4 is configured to selectively connect the second pump 62 to the second pathway or the third pathway to achieve a switching between sewage suction and air-drying functions.

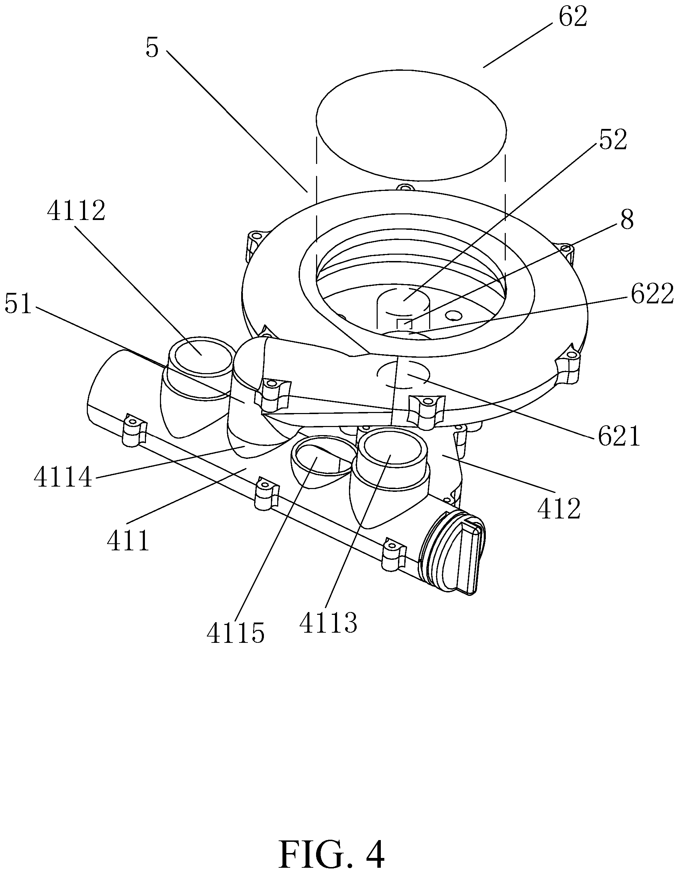

In this embodiment, the cleaning device includes a main case body 1, the clean water tank 2, and the sewage tank 3 respectively provided on two sides of the main case body 1. The main case body 1 accommodates the first pump, the second pump 62, the conversion valve 4, a snail shaped air gathering disc 5, and a heating component 8. The snail shaped air gathering disc 5 includes an air gathering inlet 52 (shown in FIG. 4) and an air gathering outlet 51, and the air gathering inlet 52 is configured to communicate with the air outlet end 622 of the second pump 62. The air gathering inlet 52 is provided in the center, and the air gathering outlet 51 is provided along its tangent direction. The airflow can evenly spread towards an outer circumference of a volute. Under an action of centrifugal force, the airflow can flow along a curve of the volute, achieving the air gathering effect. The heating component 8 can be provided between the air gathering inlet 52 and the air outlet end of the second pump 62. The heating component 8 is configured to heat air so that the cleaning component 7 can output hot air flow to achieve drying and improve drying efficiency.

In this embodiment, the conversion valve 4 includes a valve sleeve 41 and a valve body 42. The valve sleeve 41 is provided with an air inlet branch 412 configured to communicate with the air inlet end and a valve sleeve body 411 configured to accommodate the valve body 42. The valve body 42 is inserted into the valve sleeve body 411, and a sleeve design provides space and support for a rotation of the valve body 42. The second pump is switched between the second pathway or the third pathway by rotating the valve body 42. Furthermore, the valve sleeve body 411 includes a stop ring 4111 configured to limit and abut against the valve body 42 along its axial direction, to ensure a positional accuracy of the valve body 42 during rotation and to ensure accurate communication of each pathway during switching. The valve body 42 includes a tubular main valve body 421, and a control part 427 extending out the valve sleeve 41 and the main case body 1. The tubular main valve body 421 includes a first air inlet passage 424, a first air exhaust passage 425, and a multifunctional passage 426. The first air inlet passage 424 is configured to selectively connect the sewage tank 3 or environment to the air inlet end, the first air exhaust passage 425 is configured to communicate with the air outlet end and the environment, and the multifunctional passage 426 is configured to selectively connect the sewage tank 3 or the air outlet end with the cleaning component 7.

In this embodiment, the main case body 1 includes a first air vent 11 configured to communicate the main case body to the environment. The sewage tank 3 includes a water inlet pipe 31 and an air outlet pipe 32. The water inlet pipe 31 is communicated with the sewage tank 3, and the air outlet pipe 32 is communicated with the sewage tank 3. One end of the valve sleeve body 411 in an axial direction is closed by the control part 427, and the other end of the valve sleeve body 411 in the axial direction is configured to communicate with the brush head passage.

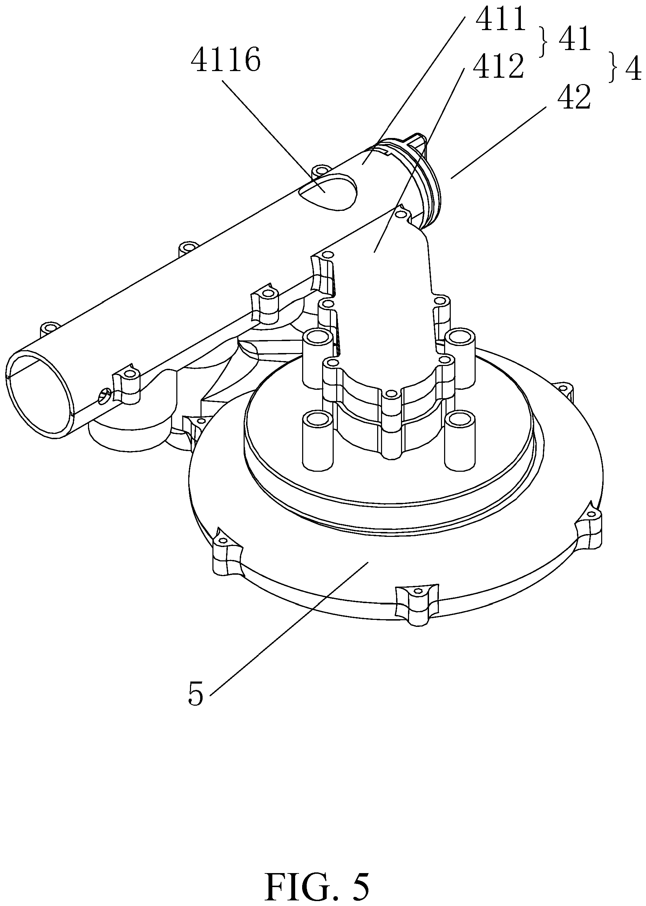

A peripheral wall of the valve sleeve body 411 is provided with a first connection pipe 4112, a second connection pipe 4113, a third connection pipe 4114, a fourth connection pipe 4115, and a valve sleeve air inlet 4116 (shown in FIGs. 4 and 5).

The first air inlet passage 424 includes a sewage suction inlet 4241, an air-drying inlet 4241', and two first air outlets 4242 that are opposite arranged. The sewage suction inlet 4241 and the air-drying inlet 4241' are shared, and the first air outlets 4242 are configured to communicate with the air inlet end through the air inlet branch 412. The sewage suction inlet 4241 is communicated with the air outlet pipe 32 through the second connection pipe 4113, and the air-drying inlet is communicated with the environment through the valve sleeve air inlet 4116 and the first air vent 11. It can be understood that the sewage suction inlet 4241 and the air-drying inlet 4241' are the openings in the same part of the valve sleeve body 411. Due to the connection of different fluid flow paths, different effects will be produced, thus distinguishing them into the sewage suction inlet 4241 and the air-drying inlet 4241'.

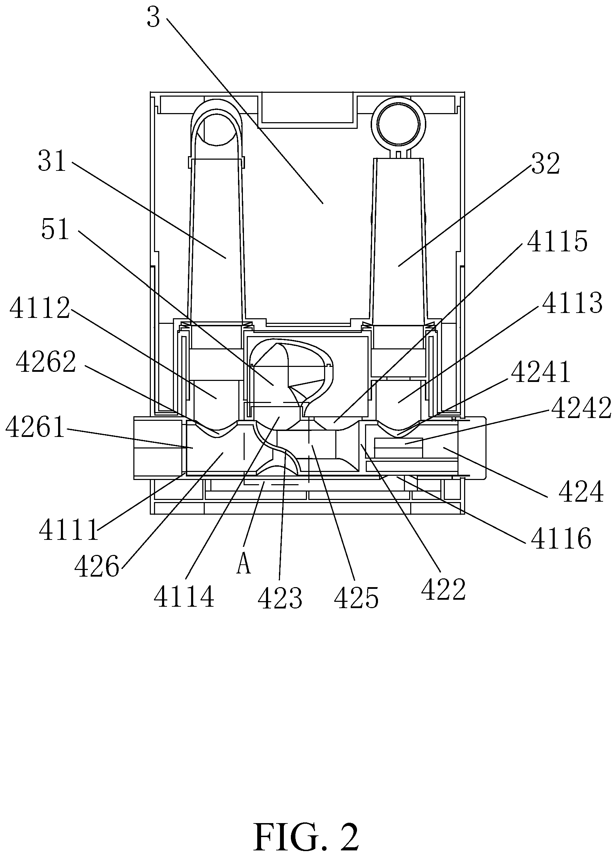

The first air exhaust passage 425 includes an air outlet opening 4251, the third connection pipe 4114 is configured to communicate with the air gathering outlet 51 and the air outlet opening 4251, and the fourth connection pipe 4115 is configured to communicate with the environment through the air outlet opening 4251 and the first air vent 11. The multifunctional passage 426 includes a second air vent 4261, a second water inlet 4262, and a second air outlet 4263. The second air vent 4261 is configured to communicate with the brush head passage through an axial end of the valve sleeve body 411, the second water inlet 4262 is communicated with the water inlet pipe 31 through the first connection pipe 4112, and the second air outlet 4263 is communicated with the air gathering outlet 51 through the third connection pipe 4114. Referring to FIGs. 2, and 6-7, by rotating the valve body 42 180, adjusting/switching the corresponding interfaces (air outlet opening 4251, second air outlet 4263) of the -first air exhaust passage 425 and the multifunctional passage 426 to a docking state (area A) of the third connection pipe 4114, thereby achieving functional switching. Specifically, referring to FIG. 2, the air outlet opening 4251 of the valve body 42 is connected to the third connection pipe 4114. By rotating the valve body 42 180 °, the second air outlet 4263 of the valve body 42 can be connected to the third connection pipe 4114 through docking. When the second water inlet 4262 is communicated with the sewage tank 3, the valve sleeve 41 closes the second air outlet 4263, and the multifunctional passage 426 participates in forming the second pathway; when the second air outlet 4263 is communicated with the air outlet end, the valve sleeve 41 closes the second water inlet 4262, and the multifunctional passage 426 participates in forming the third pathway.

When the second pump 62 is communicated with the second pathway, the cleaning component 7, multifunctional passage 426, sewage tank 3, first air inlet passage 424, second pump 62, and first air exhaust passage 425 are sequentially communicated. Specifically, the second pathway is suitable for achieving the swage suction function. The dirty and water vapor mixture generated by cleaning the surface of the item by the cleaning component 7, under the suction effect of the second pump 62, flows into the multifunctional passage 426 through the second air vent 4261, and is connected to the first connection pipe 4112 through the second water inlet 4262. It then flows into the sewage tank 3 through the water inlet pipe 31. During the precipitation and release process of the water vapor mixture in the sewage tank, the dirty gas continues to flow out of the air outlet pipe 32 under the suction effect, enters the first air inlet passage 424 through a docking connection of the second connection pipe 4113 and the sewage suction inlet 4241, and is communicated to the air inlet branch 412 through the docking connection of the first air outlet 4242. It then flows out of the air gathering outlet 51 through the snail shaped air gathering disc 5, and flows into the first air exhaust passage 425 through the docking connection of the third connection pipe 4114 and the air outlet opening 4251.

When the second pump 62 is communicated to the third pathway, the environment, the first air inlet passage 424, the second pump 62, the multifunctional passage 426, and the cleaning component 7 are sequentially connected. Specifically, the third pathway is suitable for achieving air drying function. Under the suction effect of the second pump 62, external air enters the first air inlet passage 424 through the valve sleeve air inlet 4116, connects with the air inlet branch 412 through the first air outlet 4242, passes through the snail shaped air gathering disc 5, and then flows out from the air gathering outlet 51. At this time, due to the rotation of the valve body 42, the air outlet opening 4251 connected to the third connection pipe 4114 changes to the second air outlet 4263, so that the gas enters the multifunctional passage 426 through the second air outlet 4263 and flows out from the second air vent 4261 to be sent to the surface of the cleaning component 7 for air drying and blowing. Due to the involvement of heating component 8 in the entire process, the hot air accelerates the air drying of the cleaning component.

In this embodiment, the valve body 42 is rotated 180 degrees to achieve functional switching. The control part 427 includes a protrusion 4271 that can be gripped, and only prompts to switch in place when the protrusion 431 is vertically arranged. The protrusion 4271 includes a first indicator and a second indicator provided at two ends. When the first indicator is located at an upper end, the second pump is connected to the second pathway through the conversion valve 4 to achieve a sewage suction function. When the second indicator is located at the upper end, the second pump is connected to the third pathway through the conversion valve 4 to achieve an air-drying function. This design is beneficial for a user to operate properly and can easily and clearly understand the state of the conversion valve 4 and the second pump.

In this embodiment, the tubular main valve body 421 includes a first partition 422 and a second partition 423. The first partition 422 is configured to separate the first air inlet passage 424 and the first air exhaust passage 425, and the second partition 423 is configured to separate the multifunctional passage 426 and the first air exhaust passage 425. The first partition 422 and the second partition 423 avoid mutual interference of airflow between different pathways, thereby ensuring the independence and stability of each functional pathway. Where the first partition 422 is arranged perpendicular to the tubular main valve body 421, and/or a longitudinal section of the second partition 423 is S-shaped. An orthographic projection of the first air exhaust passage 425 coincides with an orthographic projection of the multifunctional passage 426, the orthographic projection refers to a projection from top to bottom. The S-shaped design enables the valve body 42 to achieve a more complex passage layout within a limited space, thereby improving space utilization and rendering the structure of the valve body 42 more compact and reasonable; on the other hand, the S-shaped shape can guide and optimize the airflow. In an implementation mode, during the air-drying function, when the airflow flows from the air outlet end of the second pump to the multifunctional passage 426 and reaches the cleaning component 7, the S-shaped partition can render the airflow flow more smoothly, thereby reducing turbulence and energy loss, improving the conveying efficiency of the airflow, and enhancing the air-drying effect. During the sewage suction function, it also helps to maintain stable airflow between the sewage tank 3 and other pathways, thereby ensuring a smooth progress of the sewage suction process.

In this embodiment, the cleaning device further includes a control system configured to coordinate the work of various systems, a power module configured to provide power support for the device, and a walking mechanism. The control system includes the start, stop, and operation parameter adjustment of the spray cleaning system, the sewage suction system, and the air-drying system. The control system can be a simple manual operation panel or an intelligent control system based on microprocessors, thereby achieving automated and intelligent cleaning processes. The power module can be an external power adapter or a built-in rechargeable battery, and different power forms are suitable for different usage scenarios. The walking mechanism includes walking wheels, and the walking wheels can be manually driven. The walking mechanism enables the device to move on different ground environments. In an implementation mode, the walking wheels can also be driven by a motor, and the cleaning work can be carried out according to a preset pathway or mode through the control system.

The above embodiments are only used to illustrate the technical solution of the present disclosure and not to limit it. Although the present disclosure has been described in detail with reference to the preferred embodiments, those skilled in the art should understand that the technical solution of the present disclosure can be modified or equivalently replaced without departing from the spirit and scope of the technical solution of the present disclosure.

## Claims

1. A cleaning device, comprising
a spray cleaning system, which comprises a first pathway, and a clean water tank, a first pump, and a cleaning component that are connected in series to the first pathway;
a sewage suction system, which comprises a second pathway, and the cleaning component, a second pump, and a sewage tank that are connected in series to the second pathway, wherein the second pump is configured to drive sewage to be sucked in by the cleaning component and collected in the sewage tank;
an air-drying system, which comprises a third pathway, and the cleaning component, and the second pump that are connected in series to the third pathway; the second pump is configured to drive airflow into the cleaning component through the third pathway, and the second pump comprises an air inlet end and an air outlet end; and
a conversion valve, which is connected in parallel to the air inlet end and the air outlet end, and is configured to selectively connect the second pump to the second pathway or the third pathway to achieve a switching between sewage suction and air-drying functions.

2. The cleaning device according to claim 1, wherein the conversion valve comprises a valve body, and the valve body comprises:
a first air inlet passage, which is configured to selectively connect the sewage tank or environment to the air inlet end;
a first air exhaust passage, which is configured to communicate with the air outlet end and the environment;
a multifunctional passage, which is configured to selectively connect the sewage tank or the air outlet end to the cleaning component;
when the second pump is connected to the second pathway, the cleaning component, the multifunctional passage, the sewage tank, the first air inlet passage, the second pump, and the first air exhaust passage are sequentially communicated;
when the second pump is connected to the third pathway, the environment, the first air inlet passage, the second pump, the multifunctional passage, and the cleaning component are sequentially communicated.

3. The cleaning device according to claim 2, wherein the first air inlet passage comprises a sewage suction inlet, an air-drying inlet, and two first air outlets,
wherein the sewage suction inlet is configured to communicate with the sewage tank, the air-drying inlet is configured to communicate with the environment, and the first air outlets are configured to communicate with the air inlet end.

4. The cleaning device according to claim 3, wherein the multifunctional passage comprises a second air vent, a second water inlet, and a second air outlet,
wherein the second air vent is configured to communicate with the cleaning component,
when the second water inlet is communicated with the sewage tank, the valve sleeve closes the second air outlet, and the multifunctional passage participates in forming the second pathway;
when the second air outlet is communicated with the air outlet end, the valve sleeve closes the second water inlet, and the multifunctional passage participates in forming the third pathway.

5. The cleaning device according to claim 2, wherein the conversion valve comprises a valve sleeve and the valve body inserted into the valve sleeve, and the second pump is switched to connect with the second pathway or the third pathway by rotating the valve body.

6. The cleaning device according to claim 5, wherein the valve body comprises a tubular main valve body, a first partition, and a second partition,
wherein the first partition is configured to separate the first air inlet passage and the first air exhaust passage, and the second partition is configured to separate the multifunctional passage and the first air exhaust passage;
wherein the first partition is arranged perpendicular to the tubular main valve body, and/or a longitudinal section of the second partition is S-shaped,
an orthographic projection of the first air exhaust passage coincides with an orthographic projection of the multifunctional passage, and the orthographic projection refers to a projection from top to bottom.

7. The cleaning device according to claim 5, further comprises a main case body, the clean water tank and the sewage tank that are provided on two sides of the main case body,
wherein the main case body is configured to accommodate the first pump, the second pump, and the conversion valve; the main case body comprises a first air vent, and the first air vent is configured to communicate with the first air inlet passage or the first air exhaust passage;
the sewage tank comprises a water inlet pipe and an air outlet pipe, wherein the water inlet pipe is communicated with the sewage tank and the multifunctional passage, and the air outlet pipe is communicated with the sewage tank and the first air inlet passage.

8. The cleaning device according to claim 7, wherein the valve sleeve is provided with an air inlet branch configured to communicate with the air inlet end and a valve sleeve body configured to accommodate the valve body,
wherein the valve sleeve body is provided with a first connection pipe and a second connection pipe, the first connection pipe is configured to communicate with the multifunctional passage and the water inlet pipe, and the second connection pipe is configured to communicate with the air outlet pipe and the sewage suction inlet;
a control part is configured to close one end of the valve sleeve body, and the other end of the valve sleeve body is configured to communicate with the cleaning component;
the valve sleeve body comprises a third connection pipe and a fourth connection pipe, the first air exhaust passage comprises an air outlet opening, the third connection pipe is configured to communicate with the second pump and the air outlet opening, and the fourth connection pipe is configured to communicate with the air outlet opening and the environment;
the valve sleeve body comprises a valve sleeve air inlet configured to communicate with the air-drying inlet and the first air inlet passage.

9. The cleaning device according to claim 7, wherein the valve body rotates at least 90 degrees to achieve switching; and/or
the valve body comprises a control part extending from the valve sleeve and the main case body,
wherein the control part comprises a protrusion that is capable of gripping, and when the protrusion is vertically or horizontally arranged, it prompts to switch into place.

10. The cleaning device according to claim 7, wherein the main case body further comprises:
a snail shaped air gathering disc, which comprises an air gathering inlet and an air gathering outlet, wherein the air gathering inlet is configured to communicate with the air outlet end of the second pump, and the air gathering outlet is configured to communicate with the first air exhaust passage or the multifunctional passage; and/or,
a heating component configured to heat air so that the cleaning component outputs hot air flow to achieve drying.
